# EUROPEAN PATENT APPLICATION

(11) **EP 4 818 676 A1**
(43) Date of publication of application: **07.10.2026**
(21) Application number: 23960193.3
(22) Date of filing: 30.11.2023
(51) Int. Cl.: G01N 21/65, G02B 21/36

(54) **MICROSPECTROSCOPY DEVICE**

(71) Applicant: Meta Sensing Co., Ltd., Tokyo 141-0022 (JP)
(72) Inventor: OKUNO Yoshito, Toyonaka-shi, Osaka 560-0085 (JP)
(74) Representative: v. Bezold & Partner Patentanwälte - PartG mbB
(86) International application number: PCT/JP2023/042917
(87) International publication number: WO 2025/115175

(57) **Abstract**

A microspectroscopy device (1) includes: a microscope (2) irradiating a sample with visible light for magnified observation; a spectroscopic unit (3) irradiating the sample (10) with infrared light for spectral measurement; and a mirror (241) transmitting the visible light and reflecting the infrared light and scattered light generated in the sample (10) by irradiation of the infrared light or reflecting the visible light and transmitting the infrared light and the scattered light, being located in a common optical path of an optical system for the magnified observation and an optical system for the spectral measurement, and splitting into an optical system for the magnified observation and an optical system for the spectral measurement.

## Description

### Technical Field

The present disclosure relates to a microspectroscopy device.

### Background Art

Raman microspectroscopy is widely used as a method of examining distribution of material composition on a sample. A Raman microspectrometer includes a Raman spectrometer for acquiring composition information and a microscope for obtaining distribution thereof. The Raman spectrometer and the microscope include many parts such as a light source, a filter, a spectrometer, a sensor, a lens, and a mirror, making it difficult to integrate or consolidate, so these two systems are installed together.

For example, Patent Literature 1 discloses that there are included an observation optical system including an objective lens that collects light from a sample placed on a stage and a camera that captures an image of the sample received light through the objective lens, an analysis optical system including a reflective objective lens that collects electromagnetic waves emitted from an electromagnetic wave emitter to irradiate the sample and collects reflected light from the sample and a detector that generates an intensity distribution spectrum, based on the collected electromagnetic waves, and a horizontal driving mechanism that horizontally moves relative positions of the observation optical system and the analysis optical system with respect to the stage.

Further, the Raman spectrometer and the microscope, when combined, generally use a half mirror in a common optical path of the Raman spectrometer and the microscope.

For example, Patent Literature 2 discloses a configuration in which a path for white light reflected from a sample to be incident on a microscope partially overlaps with a path for Raman-scattered light provided from the sample to be incident on a detector and a half mirror that leads Raman-scattered light to the detector is provided in the overlapping common path.

### Citation List

### Patent Literature

Patent Literature 1: Unexamined Japanese Patent Application Publication No. 2022-64854
Patent Literature 2: Unexamined Japanese Patent Application Publication No. 2023-129315

### Summary of Invention

### Technical Problem

However, installing two systems together as in Patent Literature 1 necessarily increases the overall system size. Further, use of a half mirror in a common optical path of a Raman spectrometer and a microscope as in Patent Literature 2 significantly reduces light intensity of a white light source for microscopic observation, failing to maintain a function as a microscope. Further, since a Raman microscope has a large device footprint and there is a long distance between a Raman spectrometer and a sample, misalignment occurs easily, making it difficult to maintain a function of Raman spectroscopy over a long term. Therefore, an optical path for microscopy and an optical path for Raman spectroscopy need to be separated to shorten the common optical path as much as possible and maintain both functions over a long term, which poses a fundamental obstacle to miniaturization of a Raman microscope system.

The present disclosure has been made in view of the above-described circumstances, and an objective of the disclosure is to add a spectroscopic function of performing spectral measurement without affecting an overall footprint or function of a microscope.

A microspectroscopy device according to the present disclosure includes:
a microscope irradiating a sample with visible light for magnified observation;
a spectroscopic unit irradiating the sample with infrared light for spectral measurement; and
a mirror transmitting the visible light and reflecting the infrared light and scattered light generated in the sample by irradiation of the infrared light or reflecting the visible light and transmitting the infrared light and the scattered light, being located in a common optical path of an optical system for the magnified observation and an optical system for the spectral measurement, and splitting into an optical system for the magnified observation and an optical system for the spectral measurement.

### Solution to Problem

### Advantageous Effects of Invention

The present disclosure can add a spectroscopic function of performing spectral measurement without affecting an overall footprint or function of a microscope, by arranging a mirror that transmits visible light and reflects infrared light and scattered light generated in a sample or that reflects visible light and transmits infrared light and scattered light in a common optical path of an optical system for magnified observation and an optical system for spectral measurement and splitting the optical path into the optical system for magnified observation and the optical system for spectral measurement.

### Brief Description of Drawings

FIG. 1 is a diagram explaining a configuration of a microspectroscopy device according to an embodiment of the present disclosure;
FIG. 2A is a top exterior view of an adapter according to the embodiment of the present disclosure;
FIG. 2B is a side exterior view of the adapter according to the embodiment of the present disclosure;
FIG. 3A is a view illustrating a state before a spectroscopic unit is connected to the adapter according to the embodiment of the present disclosure;
FIG. 3B is a view illustrating a state after the spectroscopic unit is connected to the adapter according to the embodiment of the present disclosure;
FIG. 4 is a side view illustrating a connection part of the spectroscopic unit according to the embodiment of the present disclosure; and
FIG. 5 is a diagram explaining another configuration of a spectroscopic unit according to the embodiment of the present disclosure.

### Description of Embodiments

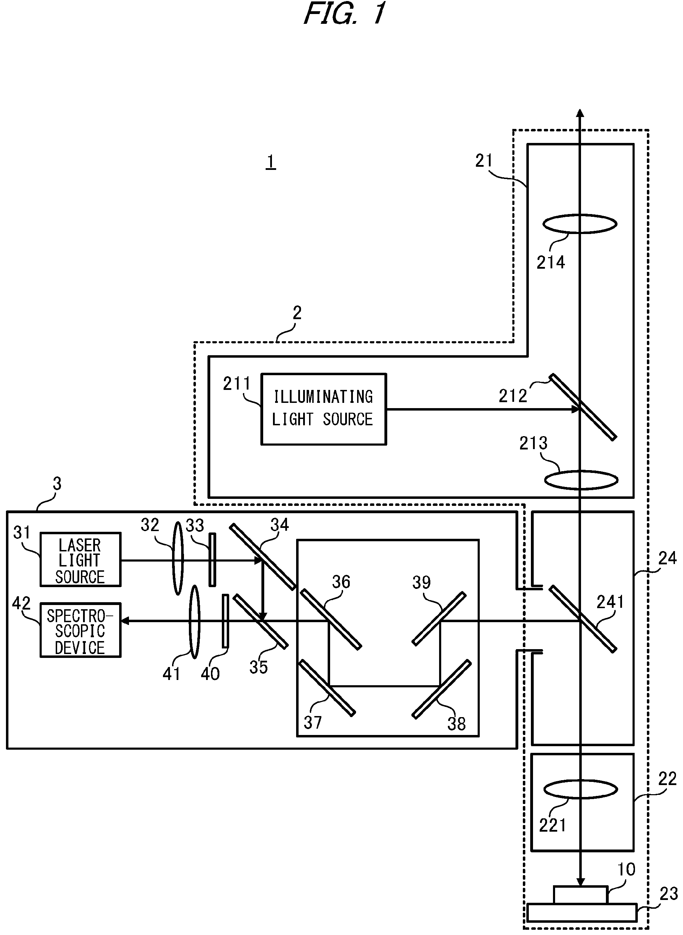

FIG. 1 is a diagram illustrating a configuration of a microspectroscopy device 1 according to an embodiment of the present disclosure. The microspectroscopy device 1 includes a microscope 2 for magnified observation of a sample to be observed and a spectroscopic unit 3 for spectral measurement for acquiring composition information of a sample 10. Herein, the spectroscopic unit 3 is detachably provided to the microscope 2.

The microscope 2 includes a body tube 21, a lens unit 22, and a stage 23. Further, the microscope 2 is provided with an adapter 24 being a connecter for connecting the spectroscopic unit 3 between the body tube 21 and the lens unit 22, and the adapter 24 is provided with a hot mirror 241 therein.

The body tube 21 constitutes a main body of the microscope 2, and includes an illuminating light source 211, a half mirror 212, a projection lens 213, and an imaging lens 214. The illuminating light source 211 is a light source that emits illuminating light for observing the sample 10. Examples of such a light source include a light emitting diode (LED) that irradiates with white light being visible light, an incandescent bulb, and a halogen lamp. The half mirror 212 reflects illuminating light emitted from the illuminating light source 211 to irradiate the projection lens 213, the hot mirror 241, and the sample 10 placed on the stage 23. The projection lens 213 converts reflected light from the sample 10 of illuminating light irradiated onto the sample 10 into a parallel light beam. The imaging lens 214 converts reflected light from the sample 10 of illuminating light being incident via the projection lens 213 into a convergent light beam. This enables visual observation of the sample 10. Further, a camera is provided at a position where a convergent light beam passed through the imaging lens 214 creates an image, thereby capturing an image of the sample 10.

The lens unit 22 includes an objective lens 221. The objective lens 221 collects reflected light from the sample 10 of illuminating light irradiated onto the sample 10. The lens unit 22 includes a mounting mechanism of a screw type or the like for attachment to the adapter 24.

The sample 10 to be observed is placed on the stage 23, where observation by the microscope 2 and spectral measurement by the spectroscopic unit 3 are performed.

The spectroscopic unit 3 includes a laser light source, a spectroscopic device, and an optical element, and performs spectral measurement for scanning an observation area of the sample 10 with laser light to acquire composition information of the observation area. Specifically, the spectroscopic unit 3 includes an irradiation optical system including a collimating lens 32, a band-pass filter 33, a reflecting mirror 34, a dichroic mirror 35, reflecting mirrors 36 and 39, and galvanometer mirrors 37 and 38 and leading laser light to a direction for irradiating the sample 10, an imaging optical system including the reflecting mirrors 36 and 39, the galvanometer mirrors 37 and 38, the dichroic mirror 35, an edge filter 40, and a condenser lens 41 and leading Raman-scattered light generated from the sample 10, and the spectroscopic device 42 for spectral measurement on Raman-scattered light. Herein, the irradiation optical system and the imaging optical system share an optical path among the dichroic mirror 35, the reflecting mirrors 36 and 39, and the galvanometer mirrors 37 and 38, in which the reflecting mirrors 36 and 39 and the galvanometer mirrors 37 and 38 constitute a scanning unit that scans the sample 10 with irradiated laser light. The spectroscopic unit 3 has a housing including an opening for passing light reflected by the reflecting mirror 39 and light incident on the reflecting mirror 39.

The laser light source 31 is a light source that emits excitation light, and irradiates the sample 10 with excitation light. Since irradiation of excitation light may easily weaken Raman-scattered light generated in the sample 10, the laser light source 31 is preferably a light source that emits high-intensity excitation light. Further, since excitation light has a wavelength serving as a reference for acquiring composition information of the sample 10, the laser light source 31 is preferably a light source that emits single-wavelength excitation light. Examples of such a light source include, for example, a semiconductor laser and a solid-state laser. Further, a light emitting diode (LED) may be used instead of a laser. Note that, excitation light is infrared light having a wavelength reflected by the hot mirror 241 provided in the adapter 24.

The collimating lens 32 converts excitation light emitted from the laser light source 31 into a parallel light beam. The band-pass filter 33 attenuates a wavelength component excluding a peak wavelength among wavelength components included in excitation light passed through the collimating lens 32. The reflecting mirror 34 reflects and leads excitation light passed through the band-pass filter 33 to the dichroic mirror 35. The dichroic mirror 35 reflects and leads excitation light to the reflecting mirror 36 constituting the scanning unit, whereas transmits Raman-scattered light having a wavelength different from excitation light.

The reflecting mirror 36 reflects and leads excitation light to the galvanometer mirror 37 constituting the scanning unit, and leads Raman-scattered light reflected by the galvanometer mirror 37 to the dichroic mirror 35. The galvanometer mirrors 37 and 38 are angle-adjustable reflective elements, and scan excitation light two-dimensionally in xy by changing orientation. The galvanometer mirror 37 is a galvanometer mirror for x-axis adjustment for scanning excitation light in an x-axis direction, and the galvanometer mirror 38 is a galvanometer mirror for y-axis adjustment for scanning excitation light in a y-axis direction. The reflecting mirror 39 reflects and leads excitation light passed through the galvanometer mirror 38 to the hot mirror 241 in the adapter 24, and reflects and leads Raman-scattered light reflected by the hot mirror 241 to the galvanometer mirror 38.

The edge filter 40 reflects or transmits light according to a wavelength, reflects light according to a wavelength of excitation light emitted from the laser light source 31, and transmits light having a wavelength longer than or shorter than a wavelength of excitation light. Therefore, the edge filter 40 transmits Raman-scattered light having a wavelength shifted from a wavelength of excitation light generated in the sample 10 by irradiation of excitation light, and leads the transmitted Raman-scattered light toward the spectroscopic device 42. The condenser lens 41 converts Raman-scattered light passed through the edge filter 40 into a convergent light beam, and leads the convergent light beam to the spectroscopic device 42.

The spectroscopic device 42 includes a spectrometer and a photodetector. The spectrometer is, for example, a Fourier transform spectrometer using interference of light. The Fourier transform spectrometer includes an interferometer, and measures an interference waveform of light by using the interferometer. The interferometer generates interference light for Raman-scattered light generated in the sample 10. The generated interference light is received by the photodetector and output as an electrical signal. The interference waveform output from the photodetector is Fourier-transformed to measure an intensity distribution (spectrum) of light for each wavelength.

The photodetector includes a plurality of light-receiving elements on a light-receiving surface. Raman-scattered light is incident on the light-receiving surface of the photodetector. When the photodetector receives Raman-scattered light from a spectroscopic element, the light-receiving element converts light of each wavelength into an electrical signal. Examples of the photodetector include, for example, a photodiode, a charge coupled device (CCD), and a complementary metal oxide semiconductor (CMOS). The signal output from the photodetector is Fourier-transformed to generate a spectrum indicating an intensity distribution for each wavelength.

The spectroscopic device 42 is connected to a not-illustrated analytical device, and a spectrum generated by the spectroscopic device 42 is input to the analytical device. The analytical device is a computer such as a personal computer, and includes a processor that processes data according to a control program, a main storage that functions as a work area of the processor, an auxiliary storage for storing data over a long term, or the like. The analytical device computes composition information of the sample 10, based on a spectrum input from the spectroscopic device 42.

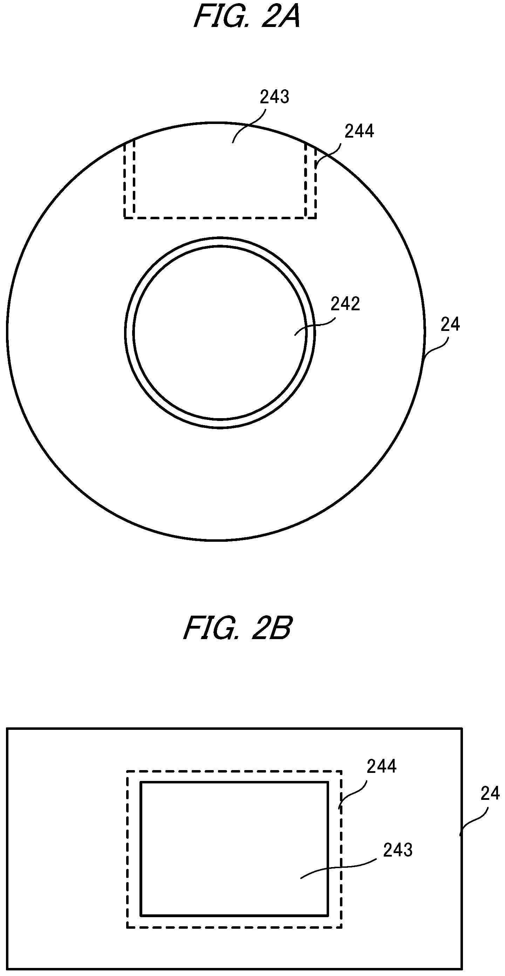

The spectroscopic unit 3 is connected to the microscope 2 via the adapter 24. FIG. 2 illustrates an exterior view of the adapter 24, FIG. 2A is a top view, and FIG. 2B is a side view. The adapter 24 is provided on an optical path between the projection lens 213 of the body tube 21 and the objective lens 221 of the lens unit 22, and is provided with an opening 242 at an upper end of the adapter 24 facing an opening provided at a lower end of the body tube 21. Further, similarly to FIG. 2A, the adapter 24 is provided with an opening at a lower end of the adapter 24 facing the objective lens 221 of the lens unit 22. The adapter 24 includes a mounting mechanism of a screw type or the like for attaching the lens unit 22, with which the lens unit 22 is detachable. Further, the adapter 24 is provided with, at the upper end of the adapter 24 and the lower end of the body tube 21, a mounting mechanism of a screw type or the like for attaching the adapter 24 to the body tube 21, with which the adapter 24 is detachable from the body tube 21.

The adapter 24 is provided with the hot mirror 241 therein. The hot mirror 241 has high reflectivity in an infrared spectrum and high transmittance in a visible spectrum. Therefore, excitation light emitted from the laser light source 31 and scattered light generated in the sample 10 being infrared light are reflected by the hot mirror 241, and illuminating light emitted from the illuminating light source 211 being visible light is transmitted through the hot mirror 241.

Further, the adapter 24 is provided with, on a lateral side of the adapter 24, an opening 243 for an optical path between the reflecting mirror 39 of the spectroscopic unit 3 and the hot mirror 241. The spectroscopic unit 3 is connected to the adapter 24 by putting the spectroscopic unit 3 into the opening 243 provided to the adapter 24. The adapter 24 is provided with, around the opening 243, a wall-like guide 244 extending inward from an outer periphery of the adapter 24. When the spectroscopic unit 3 is connected to the adapter 24, the spectroscopic unit 3 is connected by being input along the guide 244.

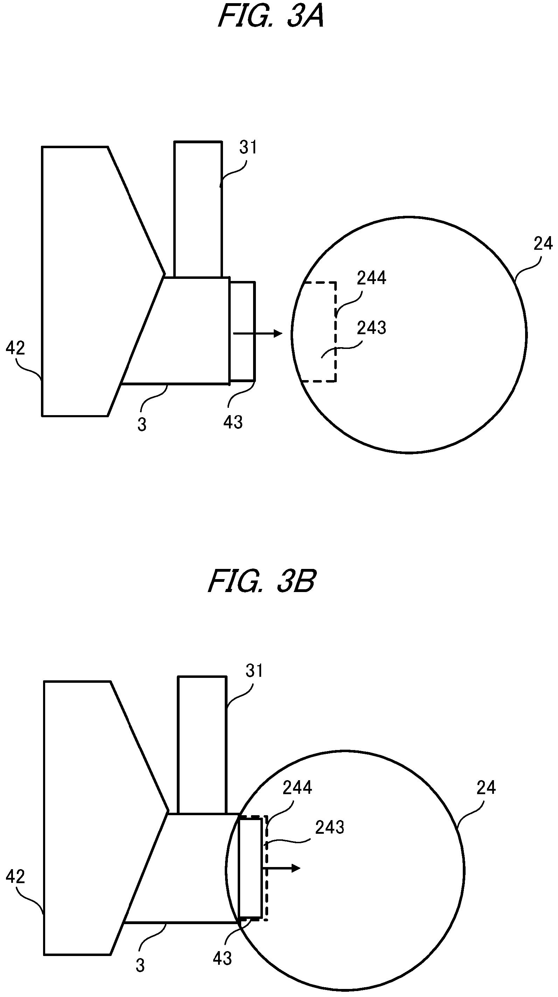

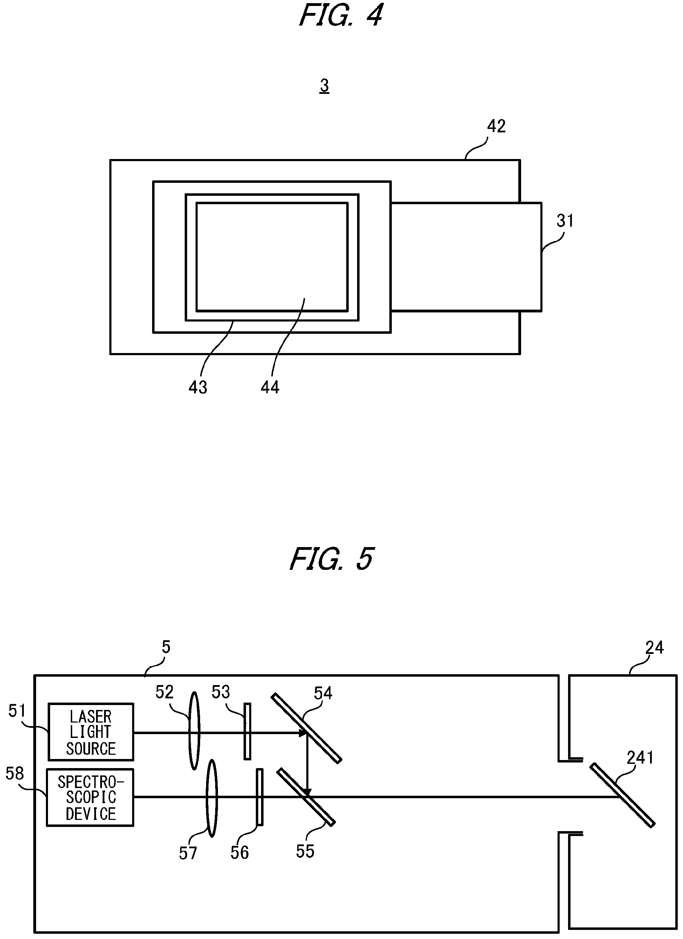

FIG. 3 illustrates a state of connecting the spectroscopic unit 3 to the adapter 24, FIG. 3A illustrates a state before connection, and FIG. 3B illustrates a state where connection is completed. The spectroscopic unit 3 includes the laser light source 31, the spectroscopic device 42, and a plurality of optical elements, and is provided with a sleeve 43 as a connection part with the adapter 24. FIG. 4 is a side view illustrating a connection part of the spectroscopic unit 3. The spectroscopic unit 3 is provided with an opening 44 for an optical path through which excitation light reflected by the reflecting mirror 39 and irradiated onto the sample 10 and Raman-scattered light generated in the sample 10 and incident on the reflecting mirror 39 are passed. The opening 44 is surrounded by a side wall extending along the optical path, which serves as the sleeve 43. When the spectroscopic unit 3 is connected to the adapter 24 in the state in FIG. 3A, the sleeve 43 is put into the opening 243 of the adapter 24, with the opening 44 of the spectroscopic unit 3 directed to a position facing the opening 243. The sleeve 43 has a size and a shape whose lateral side, when put into the opening 243, comes into contact with the guide 244 being a side wall of the opening 243, and has a length approximately equal to a length of the guide 244. As illustrated in FIG. 3B, the spectroscopic unit 3 is connected to the adapter 24 by the sleeve 43 being guided by the guide 244 and slid into the opening 243 while sliding.

Next, microscopic observation and spectral measurement of the sample 10 by the microspectroscopy device 1 in which the spectroscopic unit 3 is connected to the adapter 24 are described.

### Microscopic Observation

In microscopic observation, the illuminating light source 211 is selected as a light source. White light emitted from the illuminating light source 211 is reflected by the half mirror 212 toward a direction for irradiating the sample 10. The reflected white light is converted into a parallel light beam via the projection lens 213, and is thereafter incident on the hot mirror 241 in the adapter 24 through the opening 242 of the adapter 24 attached to a position facing the opening provided at the lower end of the body tube 21. The hot mirror 241 reflects infrared light with high reflectivity, and transmits visible light with high transmittance. Therefore, the white light incident on the hot mirror 241 is transmitted through the hot mirror 241 with little loss. The white light transmitted through the hot mirror 241 is collected by the objective lens 221 in the lens unit 22 attached to the lower end of the adapter 24 through the opening provided at the lower end of the adapter 24, and is irradiated onto the sample 10.

The white light irradiated onto the sample 10 is reflected on the sample 10, and the reflected light follows an opposite route to before and is incident on the hot mirror 241 via the objective lens 221. As described above, since the hot mirror 241 transmits visible light with high transmittance, the reflected light from the sample 10 is transmitted through the hot mirror 241 with little loss, and is converted by the projection lens 213 into a parallel light beam. The reflected light converted into a parallel light beam is directed toward the imaging lens 214 via the half mirror 212. The imaging lens 214 converts the reflected light into a convergent light beam, and creates an optical image of the sample 10 at an upper end of the body tube 21. For example, a camera is installed at the upper end, and the reflected light converted into a convergent light beam is received by an image sensor, thereby capturing an observation image of the sample 10.

### Spectral Measurement

In spectral measurement by the microspectroscopy device 1, the laser light source 31 is selected as a light source. Excitation light emitted from the laser light source 31 is converted by the collimating lens 32 into a parallel light beam, is filtered of unwanted wavelength components by the band-pass filter 33, is thereafter reflected by the reflecting mirror 34, and is incident on the dichroic mirror 35. The excitation light is reflected by the dichroic mirror 35 and is incident on the scanning unit. In the scanning unit, the excitation light is reflected by the reflecting mirror 36, is thereafter controlled, by the galvanometer mirrors 37 and 38, to scan the sample 10 in the x-axis and y-axis directions, and is reflected by the reflecting mirror 39. The excitation light passed through the scanning unit is incident on the hot mirror 241 through the opening 44 of the spectroscopic unit 3 and the opening 243 of the adapter 24. Since the excitation light incident on the hot mirror 241 is infrared light, the excitation light is reflected with high reflectivity. The excitation light reflected by the hot mirror 241 is collected by the objective lens 221 in the lens unit 22 attached to the lower end of the adapter 24 through the opening provided at the lower end of the adapter 24, and is irradiated onto the sample 10.

When the excitation light is incident on the sample 10, Raman-scattered light having a wavelength different from a wavelength of the excitation light is generated from a component included in the sample 10, and Rayleigh-scattered light having a wavelength equal to a wavelength of the excitation light is generated. The Raman-scattered light and the Rayleigh-scattered light generated in the sample 10 are incident on the hot mirror 241 via the objective lens 221. Since the Raman-scattered light and the Rayleigh-scattered light incident on the hot mirror 241 are infrared light, the Raman-scattered light and the Rayleigh-scattered light are reflected with high reflectivity and are incident on the spectroscopic unit 3. The Raman-scattered light and the Rayleigh-scattered light being incident on the spectroscopic unit 3 are passed through the reflecting mirror 39, the galvanometer mirrors 38 and 37, and the reflecting mirror 36 constituting the scanning unit and are incident on the dichroic mirror 35. The dichroic mirror 35 reflects the Rayleigh-scattered light having a wavelength equal to the excitation light, and transmits the Raman-scattered light having a wavelength different from the excitation light. Furthermore, the scattered light transmitted through the dichroic mirror 35 in incident on the edge filter 40, and is filtered of Rayleigh-scattered light. The Raman-scattered light passed through the edge filter 40 is collected by the condenser lens 41, and is input to the spectroscopic device 42. The spectroscopic device 42 measures a spectrum of the input Raman-scattered light.

As described above, the microspectroscopy device 1 is provided with the hot mirror 241, and an optical system for microscopic observation and an optical system for spectral measurement are separated via the hot mirror 241. Therefore, a microscope for magnified observation and a spectroscopic device for spectral measurement can be integrated into one system, avoiding increase in the overall system size. Further, since the hot mirror 241 is provided for the separation, light intensity of a white light source for microscopic observation is not significantly reduced, thereby maintaining a function as a microscope. Further, since spectral measurement can be performed only by connecting the spectroscopic unit 3 to the adapter 24, system miniaturization is easy and a system footprint, that is, an installation area can be reduced.

Further, in the above-described embodiment, since the spectroscopic unit 3 is detachably connected to the adapter 24, spectroscopic units of a plurality of types having different functions may be prepared and replaced as needed. For example, the spectroscopic unit 3 according to the above-described embodiment is a scanning-type spectroscopic unit that scans the sample 10 with a beam spot, but, other than this, a non-scanning-type spectroscopic unit may be prepared and replaced as needed.

FIG. 5 illustrates one example of a non-scanning-type spectroscopic unit 5. A point different from the spectroscopic unit 3 in FIG. 1 is that no optical system constituting a scanning unit is provided. The spectroscopic unit 5 includes an irradiation optical system including a collimating lens 52, a band-pass filter 53, a reflecting mirror 54, and a dichroic mirror 55 and leading laser light to a direction for irradiating the sample 10, an imaging optical system including a dichroic mirror 55, an edge filter 56, and a condenser lens 57 and leading Raman-scattered light generated from the sample 10, and a spectroscopic device 58 for spectral measurement on Raman-scattered light. Herein, the irradiation optical system and the imaging optical system share an optical path owing to the dichroic mirror 55.

In the above-described embodiment, the microspectroscopy device 1 is provided with the hot mirror 241, leads observation light transmitted by the hot mirror 241 to an optical system for microscopic observation, and leads Raman-scattered light reflected by the hot mirror 241 to an optical system for spectral measurement. In contrast, a cold mirror may be provided instead of a hot mirror. That is, an optical system for microscopic observation and an optical system for spectral measurement are separated via the cold mirror. The cold mirror has high reflectivity in a visible spectrum and high transmittance in an infrared spectrum. Therefore, illuminating light emitted from the illuminating light source 211 being visible light is reflected by the cold mirror, and excitation light emitted from the laser light source 31 and scattered light generated in the sample 10 being infrared light are transmitted through the cold mirror. In view of this, an optical system for microscopic observation is arranged on an optical path of light reflected by the cold mirror, and an optical system for spectral measurement is arranged on an optical path of light transmitted through the cold mirror.

Further, in the above-described embodiment, the spectroscopic unit 3 is guided by the guide 244 in the adapter 24 and slid into the opening 243. In contrast, the sleeve 43 of the spectroscopic unit 3 may be provided to extend into the spectroscopic unit 3, and the guide 244 of the adapter 24 may be provided to protrude from the adapter 24.

The foregoing describes some example embodiments for explanatory purposes. Although the foregoing discussion has presented specific embodiments, persons skilled in the art will recognize that changes may be made in form and detail without departing from the broader spirit and scope of the invention. The above examples and modified examples can be combined in any manner. Furthermore, some of the structural elements of the embodiments may be omitted as needed, and the present disclosure would still fall within the scope of the technical concept of the disclosure.

### Industrial Applicability

The present disclosure is widely applicable to a microspectroscopy device that integrates a microscope for magnified observation and a spectroscopic device for spectral measurement into one system.

### Reference Signs List

1 Microspectroscopy device
2 Microscope
3, 5 Spectroscopic unit
10 Sample
21 Body tube
22 Lens unit
23 Stage
24 Adapter
31, 51Laser light source
32, 52Collimating lens
33, 53Band-pass filter
34, 36, 39, 54 Reflecting mirror
35, 55Dichroic mirror
37, 38Galvanometer mirror
40, 56Edge filter
41, 57Condenser lens
42, 58Spectroscopic device
43 Sleeve
44, 242, 243 Opening
211 Illuminating light source
212 Half mirror
213 Projection lens
214 Imaging lens
221 Objective lens
241 Hot mirror
244 Guide

## Claims

1. A microspectroscopy device comprising:
a microscope irradiating a sample with visible light for magnified observation;
a spectroscopic unit irradiating the sample with infrared light for spectral measurement; and
a mirror transmitting the visible light and reflecting the infrared light and scattered light generated in the sample by irradiation of the infrared light or reflecting the visible light and transmitting the infrared light and the scattered light, being located in a common optical path of an optical system for the magnified observation and an optical system for the spectral measurement, and splitting into an optical system for the magnified observation and an optical system for the spectral measurement.

2. The microspectroscopy device according to claim 1, wherein the mirror is a hot mirror or a cold mirror.

3. The microspectroscopy device according to claim 1, wherein
the spectroscopic unit includes an optical system for the spectral measurement split by the mirror, and
the spectroscopic unit is detachable from the microscope.

4. The microspectroscopy device according to claim 3, wherein
the microscope includes an adapter incorporating the mirror,
the adapter and the spectroscopic unit are each provided with an opening through which the infrared light and the scattered light are passed between an optical system for the spectral measurement and the mirror, and
the spectroscopic unit is connected to the adapter through the opening.

5. The microspectroscopy device according to claim 4, wherein the spectroscopic unit includes a sleeve fitting into the opening of the adapter.

6. The microspectroscopy device according to claim 5, wherein the adapter includes a guide guiding the sleeve of the spectroscopic unit to fit into the opening of the adapter.

7. The microspectroscopy device according to claim 4, wherein the adapter includes a mounting mechanism detachably attaching a lens unit including an objective lens collecting the visible light and the infrared light from the mirror onto the sample.

8. The microspectroscopy device according to claim 4, wherein the adapter is detachably attached to the microscope.

9. The microspectroscopy device according to claim 3, wherein the spectroscopic unit includes a replaceable scanning-type spectroscopic unit and a non-scanning-type spectroscopic unit.
